# EUROPEAN PATENT SPECIFICATION

(11) **EP 1 334 892 B1**
(45) Date of publication and mention of the grant of the patent: **13.09.2006**
(21) Application number: 02004261.0
(22) Date of filing: 27.02.2002
(51) Int. Cl.: B60T 8/42, B60T 8/36, B60T 8/48, B60T 8/34, B60T 13/68, B60T 13/14

(54) **Electronically controlled brake system for automobiles**
Elektrisch geregeltes Fahrzeugbremssystem
Système de freinage à réglage électrique pour véhicules

(30) Priority: 05.02.2002 KR 2002006362
(43) Date of publication of application: 13.08.2003
(73) Proprietor: Mando Corporation, Pyungtaek-City, Kyungki-Do (KR)
(72) Inventor: Cheong, Byeong-Hoo, Manan-Gu, Anyang-City, Kyonggi-Do (KR)
(74) Representative: Käck, Jürgen

(56) References cited:
- DE-A- 4 329 900
- DE-A- 10 014 658
- US-A- 5 040 854
- US-A- 5 217 284

## Description

### BACKGROUND OF THE INVENTION

### Field of the Invention

The present invention relates, in general, to an electronically controlled brake system for automobiles and, more particularly, to an electronically controlled brake system designed to perform an ABS mode, TCS mode or ESP mode as desired.

### Description of the Prior Art

A conventional brake system for automobiles consists of a booster and a master cylinder, which form braking oil pressure in response to a motion of a brake pedal and feeds the oil pressure to wheel brakes, thus reducing the traveling speed of an automobile or maintaining a stopped state of the automobile. However, the automobiles with such conventional brake systems may slip over a road in accordance with road surface conditions or variations in oil pressure during a braking operation.

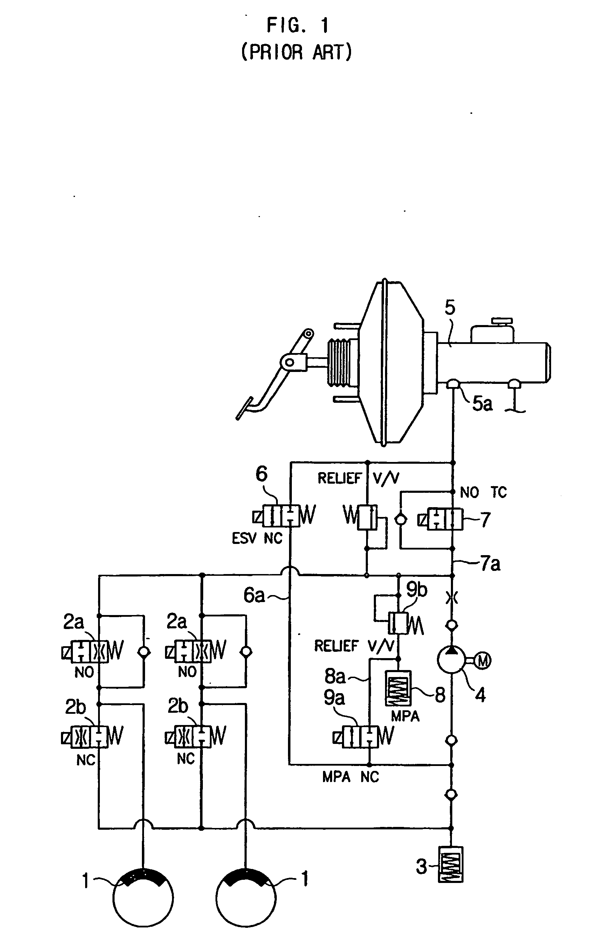

In an effort to overcome such a problem, a variety of electronically controlled brake systems, such as an anti-lock brake system (ABS), a traction control system (TCS) and an active brake control system (ABCS), have been proposed and widely used. The ABS electronically controls the oil pressure fed to wheel brakes and prevents slippage of wheels during a braking operation. The TCS is designed to prevent excessive slippage of drive wheels during quick drive or sudden acceleration. The ABCS controls oil pressure in accordance with the traveling speed and steered angle of an automobile, thus securing the traveling stability while driving the automobile. Fig. 1 is a hydraulic circuit diagram of a conventional ABCS provided with an electronic stability program (ESP).

As shown in Fig. 1, the conventional ABCS consists of a plurality of solenoid valves 2a and 2b, which control a flow of pressurized oil fed to wheel brakes 1. The ABCS also has a low-pressure accumulator 3, which temporarily stores pressurized oil drained from the wheel brakes 1 during an ABS pressure reducing mode. An oil pump 4 sucks the pressurized oil from the low-pressure accumulator 3, and outputs the oil. An NC(normal close)-type electric shuttle valve 6 is mounted on an oil suction line 6a, which branches from the inlet line of the pump 4 and extends to the pressure inlet port 5a of a master cylinder 5. The shuttle valve 6 thus selectively opens or doses the oil suction line 6a. A traction control solenoid valve 7 is mounted on an oil line 7a, which extends from the inlet of the pump 4 to the pressure inlet port 5a of the master cylinder 5. The above valve 7 thus selectively opens or closes the oil line. The ABCS further includes an intermediate pressure accumulator 8, which temporarily stores pressurized oil fed from the pump 4. An electronic control unit (ECU, not shown) is included in the ABCS, and controls the electronic parts of the ABCS.

Of the solenoid valves 2a and 2b, each of the first valves 2a is an NO(normal open)-type solenoid valve and mounted on an oil line at an upstream position before an associated wheel brake 1, while each second valve 2b is an NC(normal close)-type solenoid valve and mounted on the oil line at a downstream position after the wheel brake 1. The two types of solenoid valves 2a and 2b are operated under the control of the electronic control unit. That is, the electronic control unit senses the traveling speed of an automobile, and controls the two types of solenoid valves 2a and 2b in accordance with sensed traveling speed of the automobile.

The low-pressure accumulator 3 is independently arranged in the hydraulic circuit of the ABCS while being commonly connected to the downstream lines of the two NC-type solenoid valves 2b, thus temporarily storing pressurized oil drained from the wheel brakes 1 during an ABS pressure reducing mode.

The intermediate-pressure accumulator 8 feeds pressurized oil to the inlet of the oil pump 4 during a TCS mode or an ESP mode. The above accumulator 8 is connected to a bypass line 8a, which bypasses pressurized oil, outputted from the pump 4, to the inlet side of the pump 4. An additional NC-type solenoid valve 9a is mounted on the bypass line 8a at a downstream position after the intermediate-pressure accumulator 8, and opens the bypass line 8a during a TCS mode or an ESP mode. A relief valve 9b is mounted on the bypass line 8a at an upstream position before the intermediate-pressure accumulator 8. This relief valve 9b returns excessively pressurized oil to the master cylinder 5 during a TCS mode or an ESP mode.

The solenoid valves 2a and 2b, oil pump 4, NC-type electric shuttle valve 6, low-pressure accumulator 3, and intermediate-pressure accumulator 8 are compactly set in a single hydraulic block (not shown), which is made of aluminum to form a cubic shape.

However, in the conventional ABCS, most valves are electrically operated solenoid valves, and so it is difficult and complex to control the valves.

In addition, the valve, which normally closes the oil suction line 6a, but opens the oil suction line 6a during a TCS mode, is an NC-type electric shuttle valve 6a, and so it is only limitedly possible to accomplish desired compactness of the hydraulic block, in addition to an increase in the production cost of the ABCS.

An electronically controlled brake system is also known from DE 43 29 900 A1.

### SUMMARY OF THE INVENTION

Accordingly, the present invention has been made keeping in mind the above problems occurring in the prior art, and an object of the present invention is to provide an electronically controlled brake system for automobiles, which has an improved valve structure of the oil suction line used for delivering oil from the master cylinder to the inlet of the oil pump during a TCS mode, thus accomplishing desired compactness of the brake system and reducing the production cost of the brake system.

In order to accomplish the above objects, the present invention provides an electronically controlled brake system for automobiles, comprising: an NO-type solenoid valve arranged at an upstream line of a wheel brake and controlling a flow of pressurized oil fed from both a master cylinder and the outlet of an oil pump to the wheel brake; an NC-type solenoid valve arranged at a downstream line of the wheel brake and controlling a flow of pressurized oil discharged from the wheel brake; an oil suction line connecting the master cylinder to an inlet of the oil pump; a first check valve mounted on the oil suction line at an upstream position and opened to guide pressurized oil from the master cylinder to the oil pump during a TCS mode; an intermediate-pressure accumulator connected to the outlet of the oil pump through an oil charging line so as to be charged with the pressurized oil outputted from the outlet of the pump; an oil feeding line branching from the oil charging line and connected to the oil suction line at a downstream position after the first check valve, the oil feeding line suitable for delivering pressurized oil from the intermediate-pressure accumulator to the oil pump during an ESP mode; and a second check valve mounted on the oil feeding line to open or close the oil feeding line while preventing an inverse flow of pressurized oil from the master cylinder to the intermediate-pressure accumulator.

In the brake system, an additional NC-type solenoid valve is mounted on the oil suction line at a downstream position, and is controlled such that it is normally closed, but opened during an ESP mode.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a hydraulic circuit diagram of a conventional electronically controlled brake system for automobiles;
Fig. 2 is a hydraulic circuit diagram of an electronically controlled brake system for automobiles in accordance with the primary embodiment of the present invention;
Fig. 3 is a hydraulic circuit diagram of the brake system of this invention operated in an ABS pressure reducing mode;
Fig. 4 is a hydraulic circuit diagram of the brake system of this invention operated in an ABS pressure increasing mode;
Fig. 5 is a hydraulic circuit diagram of the brake system of this invention operated in a TCS mode;
Fig. 6 is a hydraulic circuit diagram of the brake system of this invention operated in an oil charging mode; and
Fig. 7 is a hydraulic circuit diagram of the brake system of this invention operated in an ESP mode.

### DETAILED DESCRIPTION OF THE INVENTION

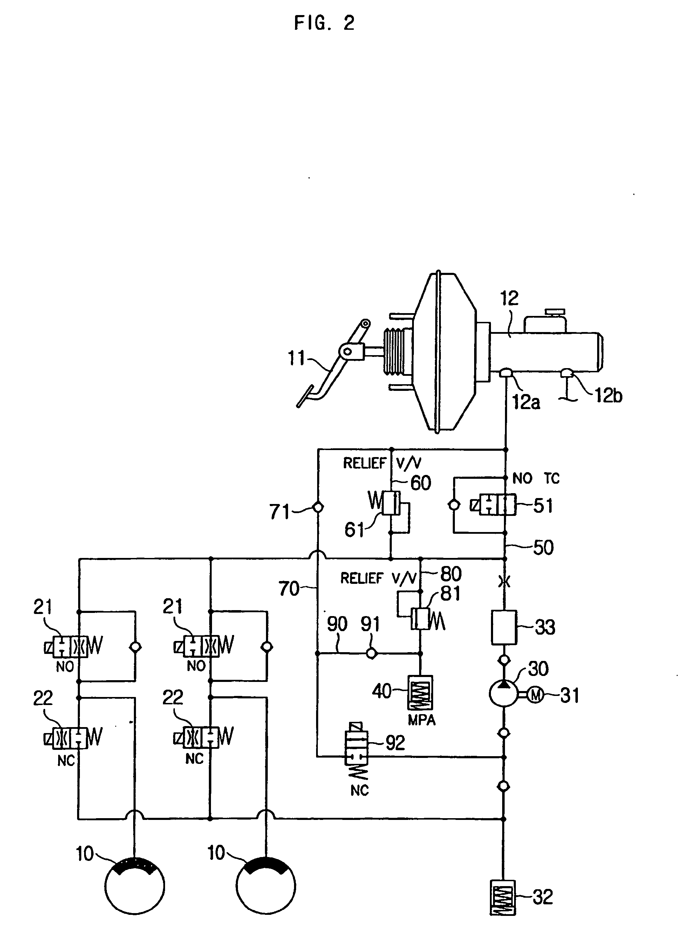

Reference now should be made to the drawings, in which the same reference numerals are used throughout the different drawings to designate the same or similar components. In the following description, the present invention is adapted to an ABCS (active brake control system), which is a kind of electronically controlled brake system and has an ESP line. The brake system of this invention has two hydraulic circuits: a primary hydraulic circuit connected to the primary port 12a of the master cylinder 12 as shown in Fig. 2 and a secondary hydraulic circuit connected to the secondary port 12b of the master cylinder 12. The two hydraulic circuits have a symmetric construction, and so it should be understood that only the primary hydraulic circuit is shown in the drawings and described in the following description.

As shown in Fig. 2, the electronically controlled brake system for automobiles in accordance with the primary embodiment of this invention consists of a plurality of solenoid valves 21 and 22, which control a flow of pressurized oil fed to wheel brakes 10 provided at the front and rear wheels of an automobile. The brake system also has an oil pump 30, which sucks pressurized oil from both the wheel brakes 10 and the master cylinder 12, and outputs the oil. This brake system further includes a low-pressure accumulator 32 which temporarily stores pressurized oil drained from the wheel brakes 10, a high-pressure accumulator 33 which is arranged at the outlet of the oil pump 30 and reduces pressure pulsation of oil outputted from the pump 30, and an intermediate-pressure accumulator 40 which is charged with the oil outputted from the pump 30 and feeds the stored oil to the inlet of the pump 30. This brake system also includes an electronic control unit (ECU, not shown), which controls the electronic parts of the system. The above-mentioned parts of the brake system are compactly set in a hydraulic block (not shown).

Of the solenoid valves 21 and 22, each of the first valves 21 is mounted on an oil line at an upstream position before an associated wheel brake 10 and uses an NO(normal open)-type solenoid valve which is normally kept open, while each second valve 22 is mounted on the oil line at a downstream position after the wheel brake 10 and uses an NC(normal close)-type solenoid valve which is normally kept closed. The two types of solenoid valves 21 and 22 are operated under the control of the electronic control unit. That is, the electronic control unit senses the traveling speed of the automobile using a plurality of wheel sensors (not shown) provided at positions around the wheels, and controls the two types of solenoid valves 21 and 22 in accordance with sensed traveling speed of the automobile. During a pressure reducing mode braking operation, the NC-type solenoid valves 22 are opened to feed pressurized oil drained from the wheel brakes 10 to the low-pressure accumulator 32, thus allowing the oil to be temporarily stored in the accumulator 32.

The oil pump 30 is operated by a motor 31 to suck pressurized oil from the low-pressure accumulator 32 during an ABS pressure increasing mode or an ABS pressure maintaining mode, and output the oil to the wheel brakes 10 or the master cylinder 12.

The primary port 12a of the master cylinder is connected to the outlet of the oil pump 30 through a main line 50, with an additional NO-type solenoid valve 51 mounted on the main line 50 for performing a traction control. This NO-type solenoid valve 51 is referred to simply as a TC solenoid valve herein below. The TC solenoid valve 51 is normally kept open to feed pressurized oil from the master cylinder 12 to the wheel brakes 10 through the main line 50 during a general mode braking operation actuated by a brake pedal 11. However, this TC solenoid valve 51 is dosed by the ECU during a traction control mode (TCS mode) as will be described later herein.

A relief line 60 branches from the main line 50 at a position between the outlet of the pump 30 and the TC solenoid valve 51, and is connected to the primary port 12a of the master cylinder 12. A relief valve 61 is mounted on the relief line 60 and controls the line 60. The relief line 60 with the relief valve 61 is used for feeding pressurized oil from the pump 30 back to the master cylinder 12 when pressure of the oil outputted from the pump 30 increases to exceed a predetermined reference level during a TCS mode.

An oil suction line 70 branches from the main line 50 so as to connect the primary port 12a of the master cylinder 12 to the inlet of the oil pump 30 and feed pressurized oil from the master cylinder 12 to the inlet of the pump 30. A first check valve 71 is mounted on the oil suction line 70 to allow the oil to flow through the line 70 only in a direction to the inlet of the pump 30. The mechanically operated first check valve 71 is mounted at an upstream position of the oil suction line 70, and is only opened during a TCS mode, thus preventing an inverse flow of oil through the line 70.

The intermediate-pressure accumulator 40 is charged with pressurized oil outputted from the oil pump 30, and feeds the stored oil to the inlet of the pump 30 during an ESP mode. In order to accomplish the above operation, the brake system of this invention further comprises an oil charging line 80, which guides pressurized oil from the outlet of the pump 30 to the intermediate-pressure accumulator 40. In addition, an oil feeding line 90 branches from the oil charging line 80 to be connected to the oil suction line 70, and is opened or closed by a second check valve 91.

In a detailed description, the oil charging line 80 extends at a first end thereof from an oil line, which connects the outlet of the oil pump 30 to the two NO-type solenoid valves 21. That is, the first end of the oil charging line 80 branches from the main line 50 at a downstream position after the TC solenoid valve 51. The second end of the oil charging line 80 is connected to the intermediate-pressure accumulator 40. A relief valve 81 is mounted on the oil charging line 80 to relieve pressure of oil in the intermediate-pressure accumulator 40 when the pressure of oil in the accumulator 40 exceeds a predetermined reference level (3bar in the embodiment).

The oil feeding line 90 branches at its first end from the oil charging line 80 at a downstream position after the first control valve 81, and is connected at its second end to the oil suction line 70 at a downstream position after the NC-type shuttle valve 71. The second check valve 91 is mounted on the oil feeding line 90, and is mechanically operated to allow the pressurized oil to flow only in a direction toward the oil suction line 70. That is, the second check valve 91 is opened only during an ESP mode so as to feed the pressurized oil from the intermediate-pressure accumulator 40 to the inlet of the oil pump 30 through both the oil feeding line 90 and the oil suction line 70.

An additional NC-type solenoid valve 92 is mounted on the oil suction line 70 at a downstream position. This NC-type solenoid valve 92 is controlled by the ECU such that it is normally closed, but is opened during a TCS mode or an ESP mode.

The operational effect of the electronically controlled brake system of this invention will be described herein below.

When an automobile with the brake system of this invention slips on a road during a braking operation, the ECU controls the brake system to perform an ABS braking operation in a pressure reducing mode, pressure increasing mode or pressure maintaining mode in response to signals outputted from the wheel sensors. The ABS braking operation of this brake system in the above-mentioned three modes is performed as follows:

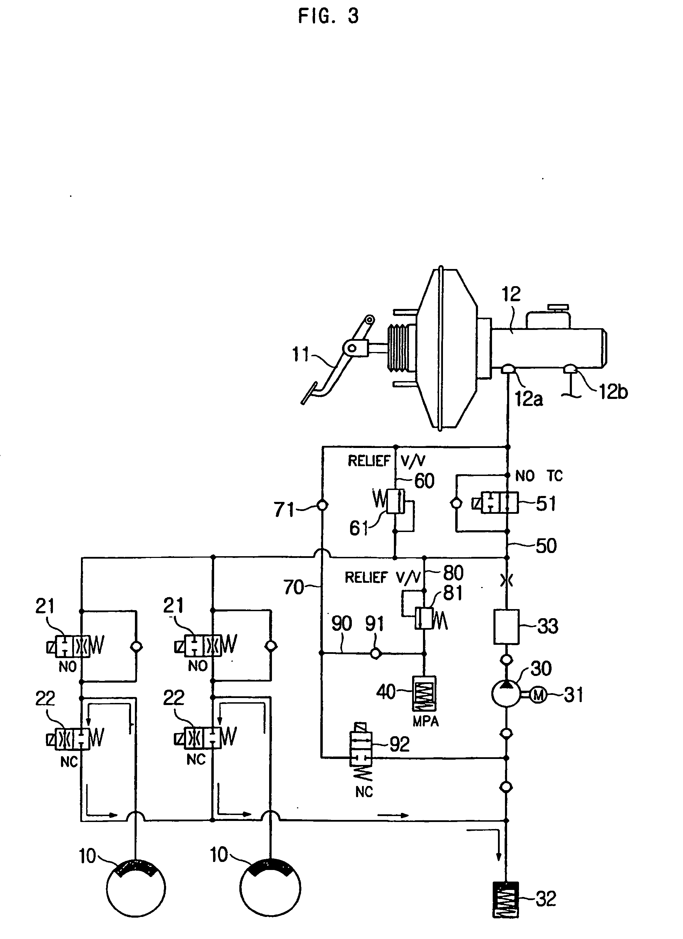

When pressurized oil is applied from the master cylinder 12 to the wheel brakes 10, and brakes the wheels in response to an actuation of the brake pedal 11, pressure of the oil inside the wheel brakes 10 may be higher than a desired level determined by the road conditions. In such a case, it is necessary to reduce the pressure of the brake oil to an appropriate level, and so the ECU opens the NC-type solenoid valves 22 to perform an ABS pressure reducing mode. When the ABS pressure reducing mode is started, a part of pressurized oil is discharged from the wheel brakes 10 as shown by the arrows of Fig. 3, and is temporarily stored in the low-pressure accumulator 32. The braking pressure of the wheel brakes 10 is thus reduced to an appropriate level through the above-mentioned process, and prevents slippage of the wheels on the road during the braking operation.

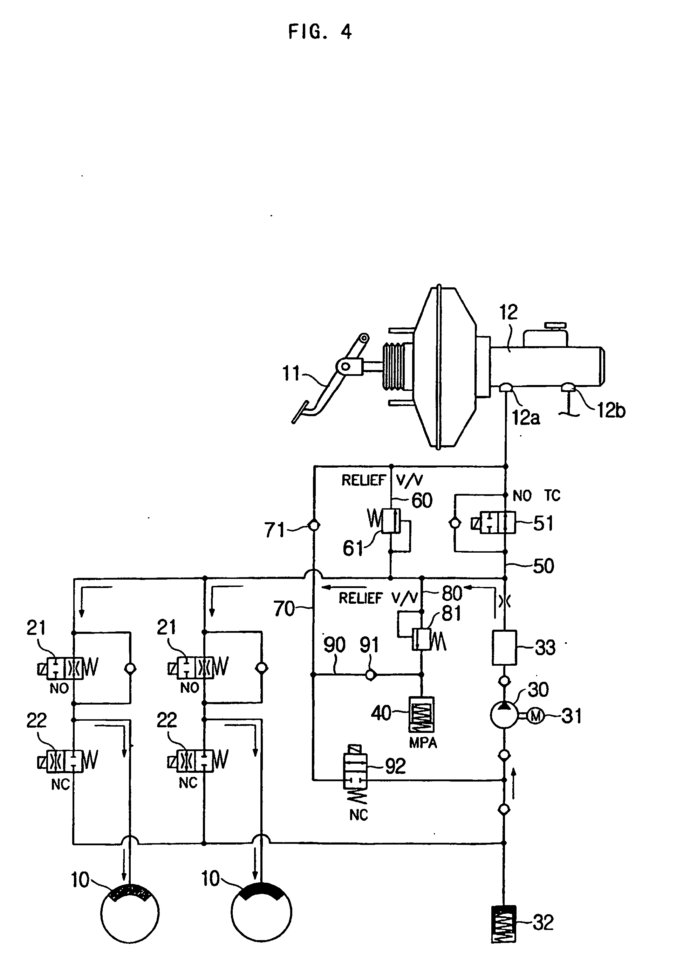

When such an ABS pressure reducing mode is maintained for a predetermined lengthy period of time, braking pressure of the wheel brakes 10 is reduced, resulting in a reduction in the braking efficiency of the brake system. In such a case, the ECU performs an ABS pressure increasing mode, wherein the oil pump 30 is started and increases the pressure of oil inside the wheel brakes 10. During such an ABS pressure increasing mode, oil stored in the low-pressure accumulator 32 is pumped by the oil pump 30, and is fed to the wheel brakes 10 through the high-pressure accumulator 33 and the open NO-type solenoid valves 21 as shown by the arrows of Fig. 4. The braking pressure of the wheel brakes 10 is thus increased.

During a braking operation, it is necessary for the brake system to perform an ABS pressure maintaining mode, wherein the braking pressure of a desired wheel brake 10 is maintained at a predetermined level when the braking pressure reaches a desired level capable of generating an optimum braking force or it is desired to prevent a resonance of the automobile. That is, the ABS pressure maintaining mode maintains the braking pressure of the desired wheel brake 10 without allowing a variation in the pressure, and closes the NO-type solenoid valve 21 associated with the desired wheel brake 10, thus preventing a supplying of additional oil to the wheel brake 10. In such a case, pressurized oil outputted from the oil pump 30 is fed to the master cylinder 12 through the open.TC solenoid valve 51, and so the ABS pressure maintaining mode is stably performed.

A TCS mode of the brake system of this invention is performed as follows, in the case of quick drive of the automobile.

When a driver strongly actuates the accelerator pedal to quickly accelerate the automobile on a slippery road, the automobile may slip over the road. When the automobile slips over a road due to its high speed, the wheel sensors sense the slippage of the automobile, and output signals to the ECU. In response to the signals from the wheel sensors, the ECU opens the NC-type solenoid valve 92 of the oil suction line 70, closes the TC solenoid valve 51 of the main line 50, and starts the oil pump 30 to perform a TCS mode.

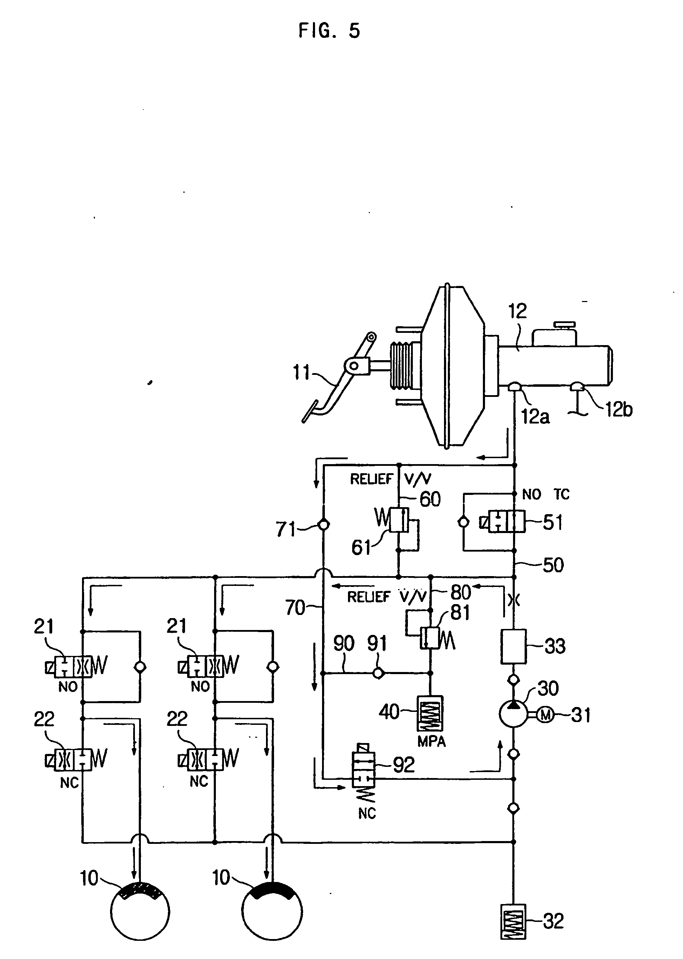

During such a TCS mode, pressurized oil of the master cylinder 12 opens the first check valve 71, and is sucked into the inlet of the oil pump 30 through the oil suction line 70, as shown by the arrows of Fig. 5, while pressurized oil outputted from the outlet of the pump 30 is fed to the wheel brakes 10 through the main line 50 and the NO-type solenoid valves 21, thus generating braking pressure in the wheel brakes 10. Therefore, when a driver strongly actuates the accelerator pedal to quickly accelerate the automobile on a slippery road, the brake system of this invention automatically locks the wheels of the automobile, even though the driver does not actuate the brake pedal. The automobile thus stably and safely accelerates on a slippery road.

An ESP mode of the brake system of this invention is performed as follows:

When an automobile travels on a slippery road or a curved road at high speeds, the automobile may not be controlled by a driver, but yaw on the road to spin. In such a case, the brake system of this invention performs an ESP mode, wherein appropriate braking pressures are independently applied to the brake wheels 10, and allow the automobile to stably and safely travel on the road.

That is, at the same time of the starting of the engine, the ECU starts the oil pump 30 after closing both the TC solenoid valve 51 and the NO-type solenoid valves 21, and opening the NC-type solenoid valve 92 of the oil suction line 70. An oil charging mode is thus performed.

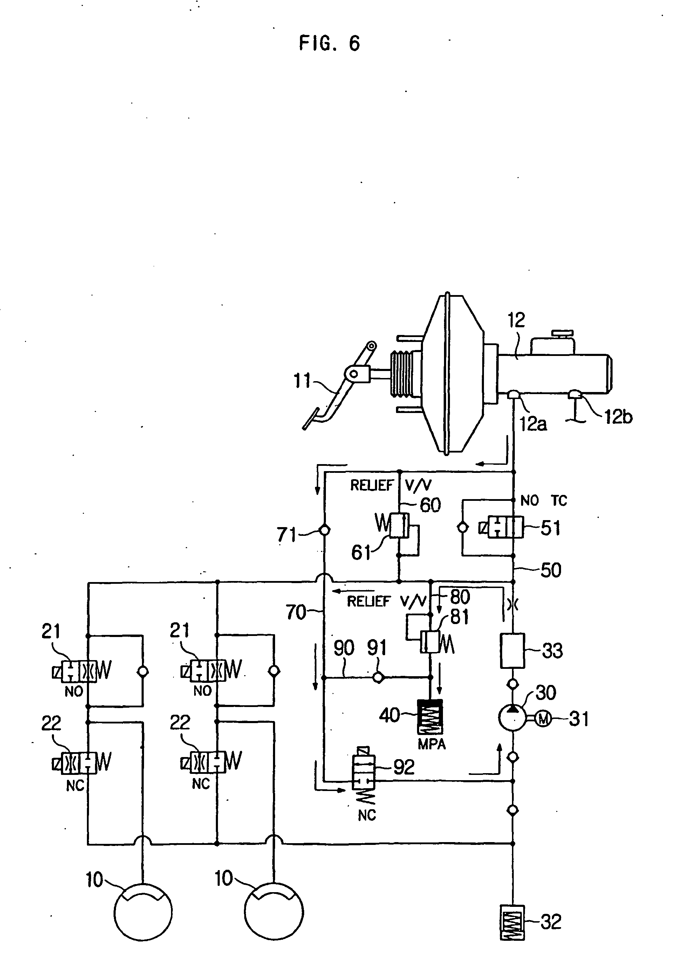

Therefore, as shown by the arrows of Fig. 6, pressurized oil of the master cylinder 12 is fed to the inlet of the oil pump 30 through the oil suction line 70, and pressurized oil outputted from the outlet of the pump 30 is fed to the intermediate-pressure accumulator 40 through the oil charging line 80, thus being charged in the accumulator 40. When pressure of the oil charged in the accumulator 40 exceeds a predetermined reference level, a part of the oil is discharged from the accumulator 40 to the master cylinder 12 through the relief valve 81. Therefore, appropriately pressurized oil of about 3bar is quickly charged in the intermediate-pressure accumulator 40, simultaneously with the starting of the engine. Such an oil charging mode for charging pressurized oil in the accumulator 40 is performed at the start of engine operation and is periodically performed in consideration of oil leakage, and so the accumulator 40 is always charged with pressurized oil of 3bar.

When a driver excessively rotates the wheels to exceed a predetermined steering angle while cornering on a road while pressurized oil is charged in the intermediate-pressure accumulator 40 as described above, the automobile may be oversteered to lean centripetally relative to a cornering direction, or under-steered to lean centrifugally relative to the cornering direction. Such over-steering or under-steering may be caused by frictional conditions of the road.

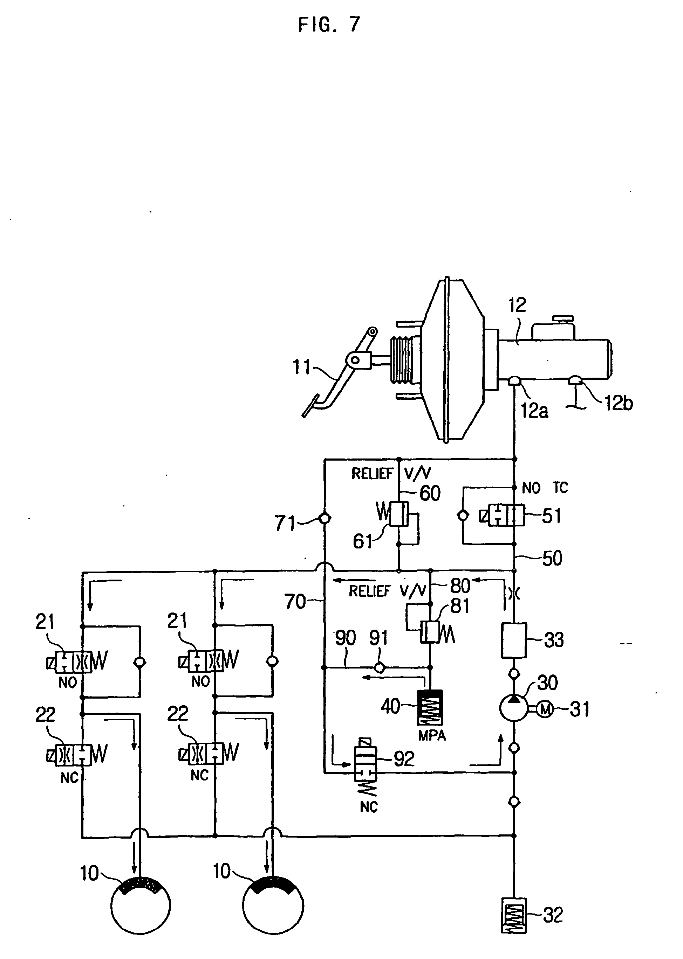

When the automobile is subjected to such over-steering or under-steering while cornering, the ECU opens the NC-type solenoid valve 92 of the oil suction line 70, and starts the oil pump 30. Therefore, as shown by the arrows of Fig. 7, pressurized oil of the intermediate-pressure accumulator 40 opens the second check valve 91 and is fed to the inlet of the pump 30 through both the oil feeding line 90 and the oil suction line 70. In addition, pressurized oil outputted from the outlet of the pump 30 is fed to the wheel brakes 10 to supply braking pressure to the brakes 10.

When the automobile is subjected to an over-steering, the pressurized oil from the intermediate-pressure accumulator 40 is fed to the wheel brakes 10 positioned outside relative to the cornering direction to form braking pressure to said outside brakes 10. When the automobile is subjected to an under-steering, the pressurized oil from the accumulator 40 is fed to the wheel brakes 10 positioned inside relative to the cornering direction to form braking pressure in the inside wheel brakes 10. Therefore, the brake system of this invention allows the automobile to stably and safely corner on a road in accordance with a steering action performed by a driver.

Since pressurized oil from the intermediate-pressure accumulator 40 is directly fed to the inlet of the oil pump 30 during such an ESP mode, it is possible to more quickly feed braking pressure to the wheel brakes 10.

As described above, the present invention provides an electronically controlled brake system for automobiles. In the brake system, a first check valve is mounted at an upstream position of an oil suction line which guides pressurized oil from the master cylinder to the inlet of the oil pump during a TCS mode, a second check valve mounted on an oil feeding line, which guides pressurized oil from the intermediate-pressure accumulator to the inlet of the oil pump through the oil suction line. That is, the valves of both the oil suction line and the oil feeding line in the brake system are mechanically operated check valves. Therefore, the brake system of this invention is easily and simply controlled, and it is possible to accomplish the recent trend of compactness of hydraulic blocks, and reduce the production cost of the brake system.

Although a preferred embodiment of the present invention has been described for illustrative purposes, those skilled in the art will appreciate that various modifications, additions and substitutions are possible, without departing from the scope of the invention as disclosed in the accompanying claims.

## Claims

1. An electronically controlled brake system for automobiles, comprising:
a normally-opened-type solenoid valve (21) arranged at an upstream line of a wheel brake (10) and controlling a flow of pressurized oil fed from both a master cylinder (12) and an outlet of an oil pump (30) to said wheel brake (10);
an normally-closed-type solenoid valve (22) arranged at a downstream line of said wheel brake (10) and controlling a flow of pressurized oil discharged from said wheel brake (10);
an oil suction line (70) connecting said master cylinder (12) to an inlet of said oil pump (30);
a first check valve (71) mounted on said oil suction line at an upstream position and opened to guide pressurized oil from the master cylinder (12) to the oil pump (30) during a traction control system mode; **characterized by**
an intermediate-pressure accumulator (40) connected to the outlet of said oil pump (30) through an oil charging line (80) so as to be charged with the pressurized oil outputted from the outlet of the pump (30);
an oil feeding line (90) branching from the oil charging line (80) and connected to the oil suction line (70) at a downstream position after the first check valve (71), said oil feeding line (90) suitable for delivering pressurized oil from the intermediate-pressure accumulator (40) to the oil pump (30) during an electronic stability program mode; and
a second check valve (91) mounted on said oil feeding line (90) to open or close the oil feeding line (90) while preventing an inverse flow of pressurized oil from the master cylinder (12) to the intermediate-pressure accumulator (40).

2. The electronically controlled brake system according to claim 1, wherein an additional normally-closed-type solenoid valve (92) is mounted on the oil suction line (70) at a downstream position, and is controlled be normally closed, but to be opened during an electronic stability program mode.

## Patentansprüche

1. Elektronisch gesteuertes Bremssystem für Kraftfahrzeuge mit:
einem normalerweise geöffneten Magnetventil (21), das an einer Stromaufwärtsleitung einer Radbremse (10) angeordnet ist und eine Strömung von Drucköl, das von sowohl einem Hauptzylinder (12) als auch einem Auslass einer Ölpumpe (30) der Radbremse (10) zugeführt wird, steuert;
einem normalerweise geschlossenen Magnetventil (22), das an einer Stromabwärtsleitung der Radbremse (10) angeordnet ist und eine Strömung von Drucköl, das aus der Radbremse (10) ausgelassen wird, steuert;
einer Ölsaugleitung (70), die den Hauptzylinder (12) mit einem Einlass der Ölpumpe (30) verbindet;
einem ersten Rückschlagventil (71), das an der Ölsaugleitung an einer stromaufwärts gelegenen Stelle angebracht ist und geöffnet wird, um während einer Traktionsregelsystem-Betriebsart Drucköl vom Hauptzylinder (12) zur Ölpumpe (30) zu führen; **gekennzeichnet durch**
einen Zwischendruck-Akkumulator (40), der mit dem Auslass der Ölpumpe (30) über eine Ölfüllleitung (80) verbunden ist, so dass er mit dem Drucköl, das aus dem Auslass der Pumpe (30) ausgegeben wird, gefüllt wird;
eine Ölzufuhrleitung (90), die von der Ölfüllleitung (80) abzweigt und an einer stromabwärts gelegenen Stelle nach dem ersten Rückschlagventil (71) mit der Ölsaugleitung (70)verbunden ist, wobei die Ölzufuhrleitung (90) zum Liefern von Drucköl vom Zwischendruck-Akkumulator (40) zur Ölpumpe (30) während einer Betriebsart mit Fahrdynamikregelung geeignet ist; und
ein zweites Rückschlagventil (91), das an der Ölzufuhrleitung (90) angebracht ist, um die Ölzufuhrleitung (90) zu öffnen oder zu schließen, während eine Rückströmung von Drucköl vom Hauptzylinder (12) zum Zwischendruck-Akkumulator (40) verhindert wird.

2. Elektronisch gesteuertes Bremssystem nach Anspruch 1, wobei ein zusätzliches, normalerweise geschlossenes Magnetventil (92) an der Ölsaugleitung (70) an einer stromabwärts gelegenen Stelle angebracht ist und so gesteuert wird, dass es normalerweise geschlossen ist, aber während einer Betriebsart mit Fahrdynamikregelung geöffnet ist.

## Revendications

1. Système de freinage à réglage électronique pour véhicules, comprenant :
une valve solénoïde de type normalement ouverte (21) agencée au niveau d'une ligne en amont d'un frein à roue (10) et régulant un flux d'huile pressurisée fournie à la fois par un cylindre principal (12) et une sortie d'une pompe à huile (30) audit frein à roue (10) ;
une valve solénoïde de type normalement fermée (22) agencée au niveau d'une ligne en aval dudit frein à roue (10) et régulant un flux d'huile pressurisée en provenance dudit frein à roue (10) ;
une conduite d'aspiration de l'huile (70) connectant ledit cylindre principal (12) à une entrée de ladite pompe à huile (30) ;
un premier clapet de non retour ou de retenue (71) monté sur ladite conduite d'aspiration de l'huile dans une position en amont et ouverte de façon à ce que l'huile pressurisée soit guidée depuis le cylindre principal (12) jusqu'à la pompe à huile (30) en mode de système de contrôle de traction ; **caractérisé par**
un accumulateur de pression intermédiaire (40) connecté à la sortie de ladite pompe à huile (30) par l'intermédiaire d'une conduite de chargement d'huile (80) de façon à être mis sous pression ou chargé par l'huile pressurisée en provenance de la sortie de la pompe (30) ;
une conduite d'alimentation en huile (90) dérivant de la conduite de chargement d'huile (80) et connectée à la conduite d'aspiration d'huile (70) dans une position en aval après le premier clapet de non retour ou de retenue (71), ladite conduite d'alimentation en huile (90) convenant pour transporter l'huile pressurisée de l'accumulateur de pression intermédiaire (40) à la pompe à huile (30) en mode de programme de stabilité électronique; et
un second clapet de non retour (91) monté sur ladite conduite d'alimentation en huile (90) pour ouvrir ou fermer la ligne d'alimentation en huile (90) tout en empêchant un flux inverse d'huile pressurisée depuis le cylindre principal (12) vers l'accumulateur de pression intermédiaire (40).

2. Système de freinage à réglage électronique selon la revendication 1, dans lequel une valve solénoïde de type normalement fermée (92) est montée sur la ligne d'aspiration d'huile (70) dans une position en aval, et est contrôlée de façon à être normalement fermée, mais ouverte en mode de programme de stabilité électronique.
